# FASCICULE DE BREVET EUROPEEN

(11) **EP 1 248 488 B1**
(45) Date de publication et mention de la délivrance du brevet: **09.05.2012**
(21) Numéro de dépôt: 02364016.2
(22) Date de dépôt: 28.03.2002
(51) Int. Cl.: H04W 8/22

(54) **Procédé de gestion de l'état d'éveil d'un terminal de radiocommunication**
Verfahren zur Bestimmung des Zustands eines Kommunikationsendgerät
Method for tracking the state of a communications terminal

(30) Priorité: 05.04.2001 FR 0104674
(43) Date de publication de la demande: 09.10.2002
(73) Titulaire: Société Française du Radiotéléphone-SFR, 75008 Paris (FR)
(72) Inventeur: Bouthors, Nicolas, 38240 Meylan (FR)
(74) Mandataire: Vidon, Patrice

(56) Documents cités:
- MOULY M ET AL: "MOBILITY AND SECURITY MANAGEMENT" , GSM SYSTEM FOR MOBILE COMMUNICATIONS, LASSAY-LES-CHATEAUX, EUROPE MEDIA, FR, PAGE(S) 432-498 XP000860007 * page 472, ligne 4 - ligne 21 * * page 476, alinéa 7.1.4.4 *
- RICHARD W. STEVENS: "TCP/IP Ilustrated: The Protocols" 1 janvier 1994 (1994-01-01) , ADDISON-WESLEY , READING, MASSACHUSETTS, USA XP002186452 * page 331, ligne 1 - page 333, ligne 27 *

## Description

Le domaine de l'invention est celui des radiocommunications. Plus précisément, l'invention concerne la gestion de l'état d'éveil des terminaux d'un réseau de radiocommunication.

L'invention s'applique notamment, mais non exclusivement, aux réseaux de communication de type GPRS (en anglais "General Packet Radio System" pour "Service de radiotéléphonie par paquets") et de type UMTS (en anglais "Universal Mobile Telecommunication System" pour "Système de télécommunication mobile universel").

De tels réseaux de radiocommunication tiennent classiquement à jour une base de données, appelée HLR (en anglais "Home Location Register" pour "registre de localisation nominal"), qui assure la gestion des abonnés mobiles du réseau. Ainsi, chaque abonné mobile est enregistré dans un unique registre HLR, qui contient notamment la description de ses droits, ainsi que les données de routage permettant aux appels entrant dans le réseau d'être acheminés jusqu'à cet abonné. Dans le cadre des réseaux de type GSM (Groupe Spécial Mobile), l'identité internationale de l'abonné mobile (IMSI pour "International Mobile Subscriber Identity") et le numéro RNIS de l'abonné mobile (MSISDN pour "Mobile Station ISDN Number") sont stockés dans le registre HLR.

De tels registres HLR disposent par ailleurs d'une information sur l'état de veille (actif ou inactif) des terminaux du réseau de radiocommunication.

Cependant, cette information est difficilement accessible, et a fortiori difficilement exploitable, par les fournisseurs de services, mais aussi par l'opérateur du réseau de radiocommunication. En effet, le registre HLR est un système critique du réseau de radiocommunication, qu'il est très difficile d'ouvrir vers d'autres systèmes internes ou externes au réseau.

Une telle difficulté réside notamment dans le fait que, pour qu'un système puisse accéder aux informations contenues dans le registre HLR, et notamment à l'information relative à l'état de veille des terminaux du réseau, il est indispensable que ce système soit connecté à un réseau de communication utilisant une signalisation de type SS7 (en anglais "Signaling System Number 7" pour "Signalisation Sémaphore n°7"). On rappelle que SS7 est un système de signalisation normalisé, dans lequel une voie particulière est utilisée pour transporter la signalisation se rapportant à un ensemble de circuits ou indépendante de tout circuit.

Or, la connaissance de l'état de veille des terminaux du réseau de radiocommunication est particulièrement utile aux fournisseurs de service, notamment dans le cadre de la transmission de messages de type SMS (en anglais "Short Message Service", service bidirectionnel de messages courts).

En effet, actuellement, la transmission de SMS vers un terminal mobile nécessite de réserver préalablement des canaux de données (fonctionnement en mode circuit).

Une telle réservation est particulièrement coûteuse, notamment lorsque le terminal est dans un état inactif, et que les canaux de données doivent être bloqués jusqu'à ce que le terminal passe dans un état actif et puisse donc recevoir le message court considéré.

Un autre inconvénient de cette technique de l'art antérieur est que les canaux de données sont des ressources rares, dont la réservation en vue de la transmission de SMS risque de provoquer un encombrement du réseau de radiocommunication.

Par ailleurs, l'information relative à l'état de veille des terminaux, disponible dans le HLR, est une information rudimentaire, qui ne peut renseigner que sur l'état actif ou inactif d'un terminal, et non sur le désir de l'utilisateur du terminal d'être ou non joint selon différents modes de communication. Notamment, cette information ne permet pas à un abonné de pouvoir recevoir des messages courts de type SMS, tout en lui permettant de ne pas recevoir d'appels.

Plus généralement, un inconvénient de la technique actuelle de gestion de l'état de veille d'un terminal est donc que l'information d'état de veille fournie par le HLR n'est pas nuancée, et ne permet pas à l'utilisateur du terminal de moduler son état d'activité.

L'invention a notamment pour objectif de supprimer ces inconvénients de l'art antérieur.

L'objet de l'invention est defini par les revendications.

Plus précisément, un objectif de l'invention est de fournir une technique de gestion de l'état d'éveil des terminaux de radiocommunication permettant à un serveur interne ou externe au réseau de connaître l'état d'éveil d'un terminal. Notamment, un objectif de l'invention est de permettre à un serveur externe au réseau de connaître l'état d'éveil d'un terminal, même si ce serveur n'est pas connecté à un réseau utilisant une signalisation de type SS7.

Un autre objectif de l'invention est de mettre en oeuvre une technique de gestion de l'état d'éveil des terminaux de radiocommunication, qui soit indépendante de l'opérateur du réseau de radiocommunication considéré, et notamment du ou des registre(s) HLR mis en oeuvre dans le réseau.

L'invention a encore pour objectif de fournir une technique de gestion de l'état d'éveil des terminaux de radiocommunication qui soit simple et peu coûteuse à mettre en oeuvre.

L'invention a également pour objectif de fournir une technique de gestion de l'état d'éveil des terminaux de radiocommunication permettant à un fournisseur de service d'envoyer des messages, notamment de type SMS, à un terminal à un coût réduit par rapport aux techniques de l'art antérieur.

Un autre objectif de l'invention est de mettre en oeuvre une technique de gestion de l'état de veille des terminaux de radiocommunication permettant à un fournisseur de service de proposer des services à valeur ajoutée aux abonnés du réseau.

L'invention a également pour objectif de fournir une technique de gestion de l'état de veille des terminaux de radiocommunication permettant à un abonné d'accéder à de nouveaux services, sans surcoût par rapport au service de type SMS de l'art antérieur.

L'invention a aussi pour objectif de mettre en oeuvre une telle technique de gestion de l'état de veille qui soit adaptée à tout type de réseau de radiocommunication, et notamment aux réseaux de type GPRS et UMTS.

Ces objectifs, ainsi que d'autres qui apparaîtront par la suite, sont atteints à l'aide d'un procédé de gestion de l'état d'éveil d'au moins un terminal d'un réseau de radiocommunication, ledit réseau permettant l'accès dudit terminal à au moins un service.

Selon l'invention, un tel procédé met en oeuvre une étape d'analyse, par un équipement de gestion d'état d'éveil, de l'activité dudit terminal, de façon à en déduire une information d'état d'éveil dudit terminal, ledit équipement étant connecté audit réseau de radiocommunication mais n'étant pas compris dans l'architecture dudit réseau, et ladite information d'état d'éveil étant accessible à au moins un fournisseur de service interne ou externe audit réseau de radiocommunication.

Ainsi, l'invention repose sur une approche tout à fait nouvelle et inventive de la gestion de l'état d'éveil des terminaux d'un réseau de radiocommunication. En effet, l'invention repose notamment sur l'introduction d'un nouvel équipement, appelé équipement de gestion d'état d'éveil, capable de gérer une information d'état d'éveil des terminaux, et de mettre cette information à la disposition de fournisseurs de service externes ou internes au réseau considéré. Un tel équipement est avantageusement indépendant de l'opérateur du réseau de radiocommunication considéré.

Un fournisseur de service souhaitant par exemple transmettre un contenu à un terminal mobile peut ainsi préalablement interroger l'équipement de gestion d'état d'éveil sur l'état actif ou inactif du terminal, de façon à s'assurer que le terminal est prêt à recevoir le contenu considéré. On évite ainsi d'encombrer le réseau, en émettant des messages ou des appels à destination d'un terminal en état de veille, ou même de réserver inutilement des circuits de données pour transmettre ces messages ou ces appels, ou tout autre type d'information.

Un tel fournisseur de service peut bien sûr être externe ou interne au réseau de radiocommunication considéré, et peut notamment, dans un cas particulier de l'invention, être l'opérateur du réseau de radiocommunication lui-même.

Avantageusement, ledit équipement de gestion d'état d'éveil comprend :
- au moins un serveur d'état d'éveil mettant en oeuvre ladite étape d'analyse ;
- au moins une base de données d'état d'éveil mettant en oeuvre une étape de mémorisation de ladite information d'état d'éveil.

Le serveur et la base de données peuvent être intégrés au sein d'un même équipement, ou être deux éléments distants coopérant pour constituer l'équipement de gestion d'état d'éveil de l'invention.

Selon une caractéristique avantageuse de l'invention, ladite base de données est accessible via ledit réseau de radiocommunication et/ou via au moins un autre réseau de communication.

De cette façon, la base de données est accessible aux fournisseurs de services internes ou externes au réseau de radiocommunication.

Selon un premier mode de réalisation préféré de l'invention, au cours de ladite étape d'analyse, ledit serveur d'état d'éveil analyse l'état d'une connexion établie entre une application d'éveil mise en oeuvre par ledit terminal et ledit serveur d'état d'éveil, et ladite information d'état d'éveil prend une première valeur "actif" lorsque ladite connexion est ouverte, et une deuxième valeur "inactif' lorsque ladite connexion est rompue.

La rupture de la connexion constitue ainsi, pour le serveur d'état d'éveil, une indication d'indisponibilité du terminal.

Avantageusement, ladite connexion est mise en oeuvre selon un protocole de type TCP (en anglais "Transmission Control Protocol" pour "protocole de contrôle de transmission").

Le maintien d'une telle connexion présente en effet l'avantage d'être très peu onéreux. L'invention s'applique bien sûr également à tout autre type de connexion.

Selon une variante de réalisation avantageuse de l'invention, ladite connexion est rompue après un temps maximum prédéterminé et réallouée ultérieurement à ladite application d'éveil mise en oeuvre par ledit terminal.

On peut alors envisager, à titre d'exemple, que le serveur d'état d'éveil considère que l'état d'éveil du terminal reste inchangé pendant la période séparant la rupture de la connexion et l'établissement d'une nouvelle connexion par le terminal.

Selon un deuxième mode de réalisation préféré de l'invention, au cours de ladite étape d'analyse, ledit serveur d'état d'éveil analyse la durée écoulée depuis la dernière réception d'un paquet transmis par une application d'éveil mise en oeuvre par ledit terminal audit serveur d'état d'éveil, et ladite information d'état d'éveil prend une première valeur "actif" lorsque ladite durée est inférieure à un seuil prédéterminé, et une deuxième valeur "inactif' lorsque ladite durée est supérieure audit seuil prédéterminé.

Ainsi, si aucune mise à jour de l'information d'état d'éveil n'a été effectuée avant une durée maximale prédéterminée (10 minutes par exemple), le serveur d'état d'éveil peut considérer que le terminal est passé dans un état indisponible, et donc inactif.

Selon un troisième mode de réalisation préféré de l'invention, au cours de ladite étape d'analyse, ledit serveur d'état d'éveil analyse le contenu d'un message d'état transmis par une application d'éveil mise en oeuvre par ledit terminal audit serveur d'état d'éveil, de façon à en déduire ladite information d'éveil dudit terminal.

Ce troisième mode de réalisation peut bien sûr être combiné avec les deux modes de réalisation décrits précédemment, de façon que le serveur d'état d'éveil analyse plusieurs paramètres (tels que le contenu d'un message d'état transmis par le terminal, la durée écoulée depuis la réception du dernier message d'état et l'état d'une connexion), de manière à déterminer une information d'état d'éveil du terminal considéré.

Préférentiellement, ladite étape d'analyse comprend une sous-étape d'affinage de ladite information d'état d'éveil, de façon que ladite information d'état d'éveil renseigne sélectivement sur l'état d'éveil dudit terminal vis-à-vis d'un mode de transmission associé à une classe de service(s).

Le terminal peut ainsi, par exemple, être considéré comme actif vis-à-vis de la réception de messages courts de type SMS, mais inactif vis-à-vis de la réception d'appels téléphoniques, ou inversement.

Selon une caractéristique avantageuse de l'invention, ledit message d'état est un message binaire comprenant une pluralité de bits, chacun desdits bits étant associé à au moins un mode de transmission, et au cours de ladite sous-étape d'affinage, ledit serveur d'état d'éveil détermine la valeur de chacun desdits bits et en déduit l'état d'éveil dudit terminal vis-à-vis dudit au moins un mode de transmission associé, un bit de valeur 0, respectivement 1, indiquant que ledit terminal est dans un état inactif, respectivement actif, pour le ou lesdits mode(s) de transmission associé(s), ou inversement.

De manière préférentielle, lesdits modes de transmission appartiennent au groupe comprenant :
- des modes de transmission de notification ;
- des modes de transmission de voix de type normale ;
- des modes de transmission de voix de type urgente ;
- des modes de transmission de données de type normales ;
- des modes de transmission de données de type urgentes ;
- des modes de transmission de voix de type filtrée.

Avantageusement, les échanges entre ladite application d'éveil mise en oeuvre par ledit terminal et ledit serveur d'état d'éveil sont mis en oeuvre selon un protocole d'activité déterminé, définissant une structure dudit message d'état.

On peut en effet envisager que le serveur d'état d'éveil puisse gérer une pluralité de protocoles d'activité, et donc une pluralité de structures de messages d'état associées, de manière à pouvoir adapter ses échanges avec une application d'éveil, en fonction des caractéristiques du terminal qui la met en oeuvre.

Selon une technique avantageuse de l'invention, ledit message d'état comprend en outre une information d'identification d'un utilisateur dudit terminal.

Une telle information d'identification peut être par exemple le MSISDN de l'utilisateur.

Préférentiellement, ledit serveur d'état d'éveil détermine ledit protocole d'activité mis en oeuvre, en fonction de ladite information d'identification.

On peut alors envisager que le serveur d'état d'éveil gère en outre une table associant à chaque information d'identification (et donc à chaque utilisateur) un type de protocole d'activité.

Selon une caractéristique avantageuse de l'invention, ledit message d'état comprend en outre au moins l'une des informations suivantes :
- une information d'authentification ;
- une adresse IP (en anglais "Internet Protocol") publique dudit utilisateur.

Une telle information d'authentification permet ainsi de s'assurer de l'identité de l'utilisateur et repose par exemple sur son MSISDN. L'adresse IP indique en outre au serveur d'état d'éveil (et donc à un éventuel fournisseur de service qui chercherait à joindre le terminal) à quelle adresse publique le terminal peut être joint.

Avantageusement, un tel procédé comprend en outre une étape de mise à disposition de ladite information d'état d'éveil, par ladite base de données d'état d'éveil, à l'un au moins desdits fournisseurs de service.

Selon une première variante avantageuse de l'invention, au cours de ladite étape de mise à disposition, ladite base de données transmet ladite information d'état d'éveil en réponse à une requête dudit fournisseur de service.

Selon une deuxième variante avantageuse de l'invention, ladite base de données d'état d'éveil met en oeuvre ladite étape de mise à disposition à chaque changement de valeur de ladite information d'état d'éveil.

Par exemple, la base de données informe les fournisseurs de service qui le souhaitent du passage du terminal dans un état actif ou inactif.

De manière préférentielle, un tel procédé comprend en outre une étape de transmission par ledit serveur d'état d'éveil d'un message informatif audit utilisateur.

Un tel message informatif peut par exemple être une notification indiquant à l'utilisateur qu'il doit consulter sa boîte vocale, ou aller chercher une page WAP contenant des informations qui lui sont destinées.

Le format d'un tel message informatif est préférentiellement de type MIME (en anglais "Multipurpose Internet Mail Extension").

Plus généralement, un tel message informatif peut utiliser les principes du courrier électronique, du Web, ou du protocole SIP (en anglais "Session Initiation Protocol") par exemple.

Préférentiellement, ledit fournisseur de service appartient au groupe comprenant :
- les serveurs de présence ;
- les serveurs de localisation ;
- les serveurs de messagerie instantanée (ou serveurs IM) ;
- les serveurs de diffusion d'informations ;
- les fournisseurs de contenu.

L'invention s'applique bien sûr également à tout autre type de fournisseur de service pour qui la connaissance de l'état d'éveil d'un terminal est utile ou intéressante.

L'invention concerne encore un serveur d'état d'éveil, un fournisseur de service et un équipement de gestion d'état d'éveil mettant en oeuvre le procédé décrit précédemment.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique d'un système de gestion de l'état d'éveil d'un terminal de radiocommunication selon l'invention, mettant en oeuvre un serveur d'état d'éveil et une base de données d'état d'éveil ;
- la figure 2 illustre un exemple d'échanges entre un terminal de radiocommunication et le serveur d'état d'éveil de la figure 1, permettant au serveur de déterminer l'état d'éveil du terminal, dans le cadre d'une connexion de type TCP ;
- la figure 3 décrit un exemple d'échanges entre un terminal de radiocommunication et le serveur d'état d'éveil de l'invention selon un protocole de type UDP (en anglais "User Datagram Protocol");
- la figure 4 illustre un exemple de réalisation de l'invention, dans lequel un fournisseur de contenu transmet un message à un utilisateur du réseau par le biais de l'équipement de gestion d'état d'éveil de l'invention.

Le principe général de l'invention repose sur la mise en oeuvre d'un équipement de gestion d'état d'éveil, capable de déterminer l'état actif ou inactif des terminaux d'un réseau de radiocommunication, et auquel peut accéder un fournisseur de service externe au réseau.

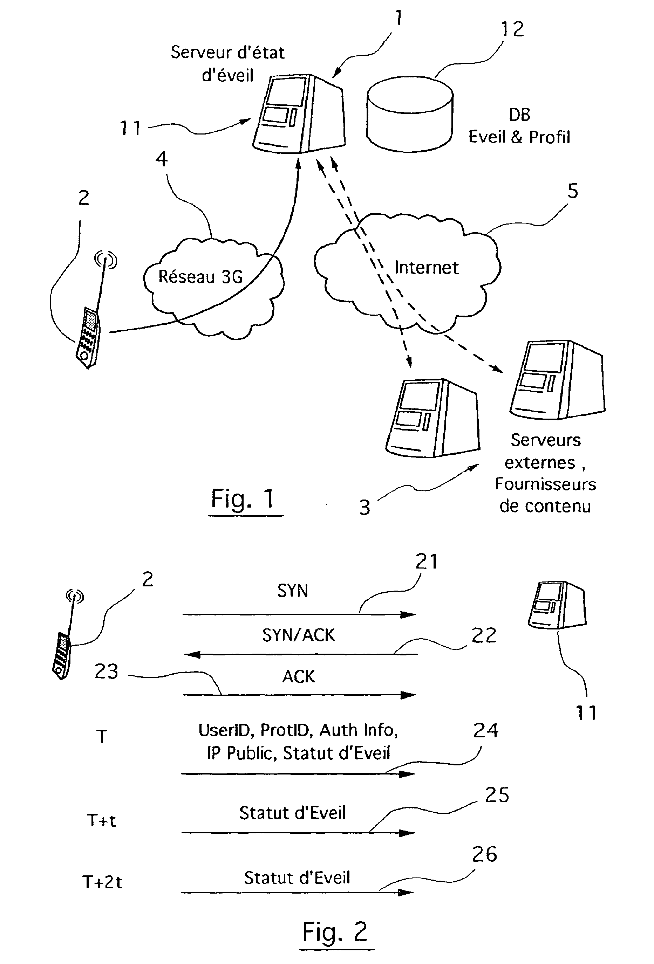

On présente, en relation avec la figure 1, un mode de réalisation de l'invention, dans lequel un équipement de gestion d'état d'éveil 1, indépendant du fournisseur du réseau considéré, gère une information d'état d'éveil d'un terminal de radiocommunication 2, et met cette information à la disposition de fournisseurs de services ou de contenu 3 externes au réseau.

Par souci de simplification, on a représenté sur la figure 1 un unique terminal de radiocommunication 2. L'invention s'applique bien sûr également au cas où l'équipement de gestion d'état d'éveil 1 gère une information d'état d'éveil pour plusieurs terminaux de radiocommunication, et préférentiellement, au cas où l'état d'activité de l'ensemble des terminaux du réseau est gérée par un ou plusieurs équipements de gestion d'état d'éveil 1.

Dans l'exemple illustré en figure 1, le terminal 2 appartient à un réseau de radiocommunication 4 au standard UMTS, encore appelé réseau 3G (pour "réseau de radiocommunication de troisième génération"). L'invention s'applique bien sûr également à tout autre type de réseau de radiocommunication, et notamment aux réseaux au standard GPRS (encore appelé réseau 2,5G) ou GSM, notamment s'il est pris en combinaison avec un protocole de type WAP (en anglais "Wireless Application Protocol").

Les fournisseurs de service 3 sont, dans l'exemple de la figure 1, reliés à l'équipement de gestion d'état d'éveil 1 par l'intermédiaire d'un réseau 5 de type internet, tel que par exemple le réseau mondial Internet. Il est à noter que le réseau 5 peut également être de tout autre type, et peut notamment être un réseau de radiocommunication au standard UMTS, GPRS ou GSM.

Par fournisseur de service 3, on entend ici tout serveur du réseau de communication 5 pour qui la connaissance de l'état d'éveil du terminal 2 représente une information utile. Un tel fournisseur de service peut être, par exemple, un fournisseur de contenu, un serveur de localisation du terminal 2, ou encore un serveur de diffusion d'informations. Le fournisseur de service 3 peut notamment être interne ou externe au réseau 4, et dans un mode de réalisation particulier de l'invention, le fournisseur de service 3 peut être compris dans l'architecture du réseau 4, ou être l'opérateur du réseau 4 lui-même.

L'équipement de gestion d'état d'éveil 1 comprend, sur l'exemple de la figure 1, un serveur d'état d'éveil 11, qui analyse l'activité du terminal 2 pour en déduire une information sur son état d'éveil, et une base de données d'état d'éveil 12, qui mémorise l'information déduite par le serveur 11.

Le serveur 11 et la base de données 12 peuvent être intégrés au sein d'un même équipement de gestion 1, ou être distants. Dans ce second cas, on peut par exemple envisager que le serveur 11 soit connecté au réseau de radiocommunication 4, et que la base de donnée 12 soit connectée à un autre réseau de communication, par exemple de type internet. Le serveur 11 et la base de données 12 comprennent alors des moyens spécifiques leur permettant d'échanger des données, et notamment l'information d'état d'éveil du terminal 2.

Selon un premier mode de réalisation illustré par la figure 1, le terminal 2 dispose d'une application d'état d'éveil qui émet à intervalles réguliers, vers le serveur d'état d'éveil 11, un datagramme indiquant qu'il est dans un état actif. Lorsqu'une période trop grande s'écoule sans que le serveur d'état d'éveil 11 ne reçoive de datagramme, ce dernier en déduit que le terminal 2 est passé dans un état inactif. Il transmet alors cette information à la base de données 12, qui met à jour un registre d'informations d'état, de façon que l'information d'état d'éveil associée au terminal 2 prenne la valeur "inactif', indiquant ainsi que le terminal 2 est dans un état de veille.

De manière évidente, dans le mode de réalisation particulier où la base de données 12 et le serveur 11 sont intégrés au sein d'un même équipement de gestion d'état d'éveil 1, l'équipement déduit l'information d'état d'éveil du terminal 2 et la stocke directement dans un registre d'information d'état.

Selon un deuxième mode de réalisation non représenté sur la figure 1, une connexion de type TCP est maintenue ouverte entre l'application d'état d'éveil du terminal 2 et le serveur d'état d'éveil 11. Le maintien de cette connexion présente l'avantage d'être très peu onéreux, et de donner au serveur d'état d'éveil 11 une indication d'indisponibilité du terminal 2 lorsque la connexion TCP est rompue. La base de données d'état d'éveil 12 (ou l'équipement de gestion d'état d'éveil 1 dans le cas où la base de données 12 et le serveur 11 sont intégrés au sein du même équipement) peut alors mettre à jour le registre des informations d'état, comme décrit précédemment.

Un tel mode de réalisation peut présenter certaines difficultés, notamment si un trop grand nombre de connexions TCP doivent être maintenues simultanément.

On peut donc envisager une variante de réalisation, correspondant à un mode de fonctionnement mixte selon lequel une connexion TCP est maintenue entre le terminal 2 et le serveur d'état d'éveil 11 pendant un temps maximum déterminé, par exemple en fonction des contraintes de fonctionnement du réseau 4, puis est réallouée ultérieurement.

On peut encore envisager de mettre en oeuvre un mode de fonctionnement correspondant à une combinaison des différents modes de réalisation présentés ci-dessus. Une connexion TCP est maintenue ouverte entre le serveur d'état d'éveil 11 et le terminal 2, qui transmet périodiquement des paquets IP (pour "Internet Protocol") au serveur 11, pour le renseigner, entre autres, sur son état d'activité. Ainsi, pour déterminer si le terminal 2 est dans un état actif ou inactif, le serveur 11 peut analyser l'état de la connexion TCP (rompue ou ouverte), puis affiner l'information d'état en estimant la durée écoulée depuis la réception du dernier paquet IP (supérieure ou inférieure à un seuil prédéterminé).

Le serveur 11 peut encore affiner l'information d'état d'éveil associée au terminal 2 en analysant le contenu du paquet IP reçu. En effet, selon l'invention, l'application d'état d'éveil du terminal 2 peut insérer dans le paquet IP transmis au serveur 11, des informations relatives à l'état d'activité qu'il souhaite indiquer au serveur 11. Ainsi, le terminal 2 peut être allumé, mais son utilisateur peut signifier au serveur 11 qu'il ne souhaite pas être vu comme actif, hormis par exemple pour les urgences.

A titre d'exemple, on peut décrire le cas d'une connexion temporaire établie à la demande d'un terminal 2. Par exemple, le terminal 2 émet une requête de type HTTP, ce qui entraîne une demande d'établissement d'une connexion TCP. Une application du terminal 2 peut demander au réseau de communication 4, de type GPRS par exemple, l'établissement d'un contexte PDP (en anglais "Packet Description Protocol" pour "protocole de description de paquet"). Ceci entraîne alors la réservation d'une adresse IP allouée au terminal 2, pour qui il est alors possible d'acheminer des paquets à travers le réseau GPRS 4. Ce contexte implique que des ressources radio soient allouées au terminal 2 lorsque, par exemple, des données sont envoyées ou reçues par ce dernier.

Une telle adresse IP externe est établie par le réseau 4 de l'opérateur pour une durée prédéterminée qui correspond à la durée d'établissement du contexte PDP.

Une telle durée est supérieure à la durée d'une connexion TCP. Par ailleurs, le réseau 4 associe à chaque contexte PDP un temporisateur, qui est désactivé au-delà d'une durée maximale prédéterminée. Une telle caractéristique est nécessaire à l'établissement d'une session Web par le terminal 2, car une telle session comprend plusieurs connexions TCP, qui doivent cependant avoir la même adresse IP. Par ailleurs, il faut noter qu'un contexte PDP est coûteux en termes de ressources réseau.

Un tel contexte PDP permet ainsi de maintenir une correspondance entre une adresse publique et une adresse privée au niveau d'un routeur (Gateway GPRS Signalling Node) qui connecte le réseau GPRS au réseau mondial Internet.

La déconnexion du terminal 2 peut être détectée par les machines d'état du protocole TCP. Par défaut, le serveur d'état d'éveil 11 considère que l'état du terminal 2 ne change pas pendant la période séparant deux connexions successives. En d'autres termes, le serveur d'état d'éveil 11 exploite la dernière information d'état reçue du terminal 2 pour déterminer l'état actif ou inactif de ce dernier.

Dans le cas où l'information d'état du terminal 2 n'a pas été mise à jour depuis un important laps de temps (et donc par exemple si le "PDP context" du terminal 2 est tombé), le serveur d'état 11 peut modifier l'état du terminal 2 qu'il a mémorisé (et donc déduire de la rupture du contexte que le terminal 2 ne peut plus être atteint). Par exemple le serveur d'état 11 peut considérer que le terminal 2 est dans un état indisponible, ou inactif si aucune nouvelle information d'état ne lui a été transmise depuis un intervalle de temps supérieur à un seuil prédéterminé, de l'ordre de 10 minutes par exemple.

Dans l'exemple de la figure 1, le serveur d'état d'éveil 11 gère l'information d'état d'éveil du terminal 2, mais peut également gérer des informations relatives au profil de l'abonné utilisateur du terminal 2. Ces informations peuvent être mémorisées dans la base de données d'état d'éveil 12.

L'utilisateur du terminal 2 souscrit implicitement ou explicitement auprès du serveur 11 à un protocole d'activité, déterminant notamment la structure du datagramme ou du paquet IP transmis au serveur 11. Dans un mode de réalisation de l'invention, le protocole d'activité détermine que le message émis depuis le terminal 2 à destination du serveur 11 comporte un certain nombre de bits, et que chaque bit est associé à un mode de transmission particulier, associé à une classe de services proposés au terminal 2.

Un même service peut bien sûr appartenir à plusieurs classes de services distinctes, si plusieurs modes de transmission distincts sont mis en oeuvre par le fournisseur de service pour proposer ce service à un utilisateur. Par exemple, un fournisseur de contenu peut choisir de transmettre un contenu au terminal 2 par transmission de données de type WAP, et par notification de type SMS.

Ainsi, l'équipement de gestion d'état d'éveil 1 ou la base de données d'état d'éveil 12 peut tenir à jour un registre d'état d'éveil regroupant des informations d'état d'éveil de la structure suivante :

| | |
|---|---|
| Bit 1 | Notification |
| Bit 2 | Voix normale |
| Bit 3 | Voix Urgente |
| Bit 4 | Push WAP normal |
| Bit 5 | Push WAP urgent |
| Bit 6 | Voix Filtrée |

Chaque bit 1 à 6 est associé à un mode de transmission utilisé préférentiellement pour une classe de services auquel le terminal 2 peut accéder via le réseau de communication 4. Par exemple, le bit 1 correspond à l'émission et/ou à la réception par le terminal 2 de notifications, par exemple de type SMS. Les bits 2 et 3 correspondent à la possibilité de recevoir des appels de type normaux ou urgents. Les bits 4 et 5 sont associés à la transmission de données dans le cadre du protocole WAP.

On peut citer, à titre d'exemple, les services de type "alerte" liés à la sécurité des biens ou des personnes et les services de type "info bourses", qui utilisent classiquement un mode de type Push WAP.

Si l'utilisateur du terminal 2 envoie un paquet IP au serveur 11 dans lequel tous les bits de la structure ci-dessus sont positionnés à 1, le serveur 11 peut en déduire que le terminal 2 doit être considéré comme actif pour tous les modes de transmission ci-dessus. Inversement, si tous les bits sont positionnés à 0, l'utilisateur souhaite que son terminal 2 soit considéré en état de veille vis-à-vis de l'ensemble des modes de transmission, et ne souhaite donc pas être dérangé.

Si le serveur d'état d'éveil 11 reçoit un paquet IP en provenance du terminal 2 dans lequel les bits 1 et 3 de la structure ci-dessus sont de valeur 1, et tous les autres bits ont pour valeur 0, le serveur 11 peut donc en déduire que l'utilisateur accepte de recevoir des notifications (par exemple des messages courts) et des appels urgents, mais souhaite être considéré comme inactif, et donc indisponible, pour tous les autres modes de transmission mis en oeuvre dans le réseau 4.

Une information d'identification, appelée UserID, est par ailleurs associée à l'utilisateur du terminal 2 et transmise dans le datagramme au serveur d'état d'éveil 11. Le serveur 11 peut alors interpréter le protocole utilisé dans le paquet IP reçu, en fonction de cette information d'identification. Il peut en effet conserver en mémoire une table associant à chaque UserID du réseau de radiocommunication 4 un protocole d'activité.

Par exemple, on peut utiliser le MSISDN de l'utilisateur du terminal 2 comme information d'identification. On peut bien sûr également envisager d'utiliser tout autre type de donnée d'identification permettant au serveur 11 d'identifier la provenance d'un datagramme ou d'un paquet reçu.

Par ailleurs, si le terminal 2 souhaite pouvoir accéder à un service proposé par un fournisseur de service 3 disposant d'un APN (en anglais "Access Point Name" pour "nom de point d'accès") particulier pour son service, l'application d'état d'éveil du terminal 2 joint au datagramme transmis au serveur 11 dans un paquet IP, l'adresse IP "publique" par laquelle l'utilisateur du terminal 2 peut être joint.

De même, si le fournisseur de service 3 est connecté à l'équipement de gestion d'état d'éveil 1 ou à la base de données d'état d'éveil 12 par l'intermédiaire du réseau mondial Internet, une connexion TCP peut être établie entre le terminal 2 et l'équipement 1 (ou la base de données 12), et une information d'authentification peut être ajoutée au paquet IP transitant entre le terminal 2 et l'équipement 1 lors de l'établissement de la session.

L'information d'état d'éveil relative au terminal 2, mise à jour par le serveur d'état d'éveil 11, peut ensuite être mise à la disposition des fournisseurs de service 3 par l'intermédiaire du réseau 5. Plusieurs mécanismes peuvent être envisagés dans le cadre de l'invention pour ce faire.

Ainsi, on peut envisager que la base de données 12 ( ou l'équipement 1) mémorise les adresses d'une pluralité de fournisseurs de service 3, et qu'il envoie une notification à tous ces fournisseurs de service 3 à chaque fois que l'information d'état d'éveil associée au terminal 2 change de valeur.

On peut aussi envisager qu'un fournisseur de service 3 effectue régulièrement, ou seulement quand il en a besoin, un sondage (en anglais "polling") auprès de l'équipement de gestion d'état d'éveil 1, ou auprès de la base de données 12, pour connaître l'état d'activité d'un terminal 2.

On peut encore envisager de mettre en oeuvre dans le cadre de l'invention toute autre technique permettant à un fournisseur de service 3 qui le souhaite de connaître l'information d'état d'éveil relative à un terminal 2 donné.

L'invention telle qu'illustrée en figure 1 permet encore au serveur d'état 11 de notifier l'utilisateur du terminal 2. En d'autres termes, le serveur d'état 11 peut transmettre au terminal 2 une information particulière, ou une notification conduisant son utilisateur à aller chercher une information particulière. Par exemple, le serveur 11 peut inviter l'utilisateur du terminal 2 à aller chercher une page WAP contenant une information de notification destinée au terminal 2.

On présente désormais, en relation avec la figure 2, un exemple de réalisation de l'invention, dans lequel une connexion TCP reste ouverte entre le terminal 2 et le serveur d'état d'éveil 11. Selon le protocole TCP, le terminal 2 envoie (21) régulièrement un message de synchronisation, appelé SYN, au serveur d'état d'éveil 11. Par exemple, un SYN est envoyé toutes les 14 secondes.

Le serveur 11 acquitte (22) le SYN reçu, et le terminal 2 acquitte (23) à son tour le message d'acquittement reçu du serveur 11.

Une information initiale est envoyée (24) par l'application d'état d'éveil du terminal 2 au serveur 11 à l'initiation de la connexion TCP. Une telle information initiale comprend par exemple l'information d'identification UserID de l'utilisateur du terminal 2, l'adresse IP "publique" à laquelle il peut être joint, une information d'authentification, ainsi que l'information d'état d'éveil que l'utilisateur souhaite signifier au serveur 11. Par la suite, seuls les SYN de maintien de la connexion et des statuts d'éveil contenant les informations d'état d'éveil du terminal 2 sont envoyés au serveur 11.

Selon ce mode de réalisation, en dehors de l'établissement de la connexion où un gros volume d'information est véhiculé entre l'application d'état d'éveil du terminal 2 et le serveur 11, on remarque donc que le volume d'information utilisateur transmis par le terminal 2 est avantageusement restreint.

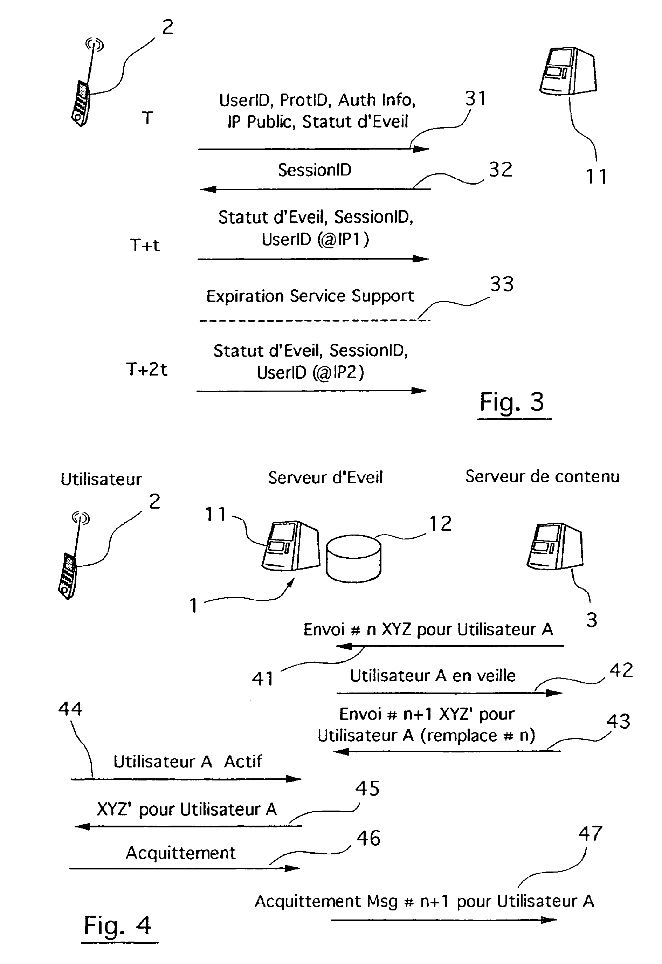

On présente désormais, en relation avec la figure 3, un exemple de mise en oeuvre de l'invention similaire à celui illustré en figure 2, mais dans lequel le protocole utilisé est le protocole UDP. Dans l'exemple de la figure 3, le terminal 2 appartient à un réseau de radiocommunication 4 au standard GPRS.

On rappelle que le protocole UDP est le protocole utilisé par le protocole WAP pour son transport entre un terminal mobile et la passerelle WAP. Lors de l'émission d'un message, une connexion "support" (en anglais "bearer") est donc établie dans le réseau GPRS 4 entre le terminal mobile 2 et la passerelle GPRS "Service Node", appelée GGSN. Ce support va perdurer pendant un temps configurable dans le réseau, indépendant du service tournant au-dessus de UDP. On rappelle qu'une connexion "support" (en anglais "bearer") est un mode de connexion de niveau inférieur permettant de transporter des paquets IP entre 2 points. A titre d'exemple, on peut citer le protocole PDP (en anglais "Packet Description Protocol" pour "protocole de description de paquet") utilisé dans une connexion modem.

La passerelle GGSN maintient alors une correspondance entre une adresse IP allouée dynamiquement au terminal 2 lors de l'établissement du service support, et l'information d'identification du terminal 2.

Il faut donc reconstituer une notion de session au-dessus du protocole UDP, associant l'information d'identification de l'utilisateur du terminal 2 (c'est-à-dire son UserID, par exemple son MSISDN) et une adresse IP changeante.

Ainsi qu'illustré sur la figure 3, l'application d'état d'éveil mise en oeuvre par le terminal 2 envoie donc (31) une information d'initialisation au serveur 11, comprenant notamment son UserID, une information d'authentification, l'adresse IP "publique" à laquelle il peut être joint, et l'information propre à son état.

Une session est alors établie, et le serveur 11 envoie (32) au terminal 2 une donnée appelée SessionID permettant d'identifier la session. Une première adresse IP, notée @IP1 sur la figure 3, est associée au terminal 2.

Après l'expiration 33 du service support, une nouvelle adresse IP, notée @IP2 sur la figure 3 doit être associée au terminal 2.

Dans les exemples présentés en relation avec les figures 2 et 3, le paquet de données envoyé par le terminal 2 au serveur 11 contient peu d'informations. On peut donc envisager dans le cadre de l'invention que le serveur 11 émette une réponse à destination du terminal 2 sur réception du paquet de données. Une telle réponse, ou information de retour, peut être par exemple une information de type push, c'est-à-dire une notification. Plus généralement, la structure de l'information de retour peut utiliser les principes de l'e-mail, du Web et du protocole SIP, et par exemple être constituée de blocs d'informations de type MIME.

On peut par exemple envisager qu'une telle information de retour présente la structure suivante:

| |
|---|
| Notification Voix |
| Normale dans Vmail |
| |
| Notification Voix |
| Urgente dans Vmail |
| |
| Push WAP normal |
| |
| Push WAP urgent |
| |
| Email urgent |
| |
| Email normal |
| |
| "SMS like message" |

Ainsi, le champ "Notification Voix" permet d'indiquer à l'utilisateur qu'il doit aller consulter sa boîte vocale, et les champs "Push WAP normal" et "Push WAP urgent" permettent d'indiquer à l'utilisateur qu'il peut aller chercher une page WAP (de type Push).

On présente désormais, en relation avec la figure 4, la manière selon laquelle l'invention est mise en oeuvre lorsqu'un fournisseur de service 3 souhaite envoyer une notification à l'utilisateur d'un terminal 2.

Au cours d'une étape référencée 41, le fournisseur de service 3 envoie un contenu XYZ à l'équipement de gestion d'état d'éveil 1, destiné à l'utilisateur du terminal 2.

L'équipement 1 (par exemple par le biais de la base de données 12 illustrée en figure 1) lui renvoie (42) en retour une information indiquant que le terminal 2 est en état de veille pour ce type de service.

Au cours d'une étape référencée 43, le fournisseur de service 3 envoie à l'équipement 1 un nouveau contenu XYZ' destiné à remplacer le contenu XYZ émis précédemment.

L'équipement 1 ayant reçu (44) du terminal 2 une information indiquant qu'il était en état actif, transmet le contenu XYZ' au terminal 2 au cours d'une étape référencée 45. Par exemple, dans un mode de réalisation particulier où l'équipement 1 comprend un serveur d'état d'éveil 11 et une base de données d'état d'éveil 12 distants, le serveur 11 transmet le contenu XYZ' au terminal 2, sur validation de l'état actif du terminal 2 par la base de données 12.

Le terminal 2 peut ensuite acquitter (46) la réception de ce contenu. L'équipement de gestion d'état d'éveil 1 acquitte (47) alors à son tour auprès du fournisseur de service 3 l'envoi du message de contenu XYZ' à l'utilisateur du terminal 2.

On peut noter que, dans l'exemple de la figure 4, l'équipement de gestion d'état d'éveil 1 joue un rôle proche de celui des systèmes d'envoi de message courts de type SMS de l'art antérieur, sans pour autant être connecté au registre HLR mis en oeuvre dans les réseaux de radiocommunication classiques.

## Revendications

1. Procédé de gestion de l'état d'éveil d'au moins un terminal d'un réseau de radiocommunication, ledit réseau permettant l'accès dudit terminal à au moins un service,
**caractérisé en ce qu'**il met en oeuvre une étape d'analyse, par un équipement dédié à la gestion d'état d'éveil, de l'activité dudit terminal, délivrant une information d'état d'éveil dudit terminal, accessible à au moins un fournisseur de service interne ou externe audit réseau de radiocommunication
**en ce que** ladite information d'état d'éveil renseigne sélectivement sur l'état d'éveil dudit terminal vis-à-vis d'un mode de transmission associé à une classe de service(s),
et **en ce que** ledit équipement dédié à la gestion d'état d'éveil est connecté audit réseau de radiocommunication.

2. Procédé de gestion selon la revendication 1, **caractérisé en ce que** ledit équipement dédié à la gestion d'état d'éveil comprend :
- au moins un serveur d'état d'éveil mettant en oeuvre ladite étape d'analyse ;
- au moins une base de données d'état d'éveil mettant en oeuvre une étape de mémorisation de ladite information d'état d'éveil.

3. Procédé de gestion selon la revendication 2, **caractérisé en ce que** ladite base de données est accessible via ledit réseau de radiocommunication et/ou via au moins un autre réseau de communication.

4. Procédé de gestion selon l'une quelconque des revendications 2 et 3, **caractérisé en ce qu'**au cours de ladite étape d'analyse, ledit serveur d'état d'éveil analyse l'état d'une connexion établie entre une application d'éveil mise en oeuvre par ledit terminal et ledit serveur d'état d'éveil,
et **en ce que** ladite information d'état d'éveil prend une première valeur "actif" lorsque ladite connexion est ouverte, et une deuxième valeur "inactif" lorsque ladite connexion est rompue.

5. Procédé de gestion selon la revendication 4, **caractérisé en ce que** ladite connexion est mise en oeuvre selon un protocole de type TCP (en anglais "Transmission Control Protocol" pour "protocole de contrôle de transmission").

6. Procédé de gestion selon l'une quelconque des revendications 4 à 5, **caractérisé en ce que** ladite connexion est rompue après un temps maximum prédéterminé et réallouée ultérieurement à ladite application d'éveil dudit terminal.

7. Procédé de gestion selon l'une quelconque des revendications 2 à 6, **caractérisé en ce qu'**au cours de ladite étape d'analyse, ledit serveur d'état d'éveil analyse la durée écoulée depuis la dernière réception d'un paquet transmis par une application d'éveil mise en oeuvre par ledit terminal audit serveur d'état d'éveil,
et **en ce que** ladite information d'état d'éveil prend une première valeur "actif" lorsque ladite durée est inférieure à un seuil prédéterminé, et une deuxième valeur "inactif" lorsque ladite durée est supérieure audit seuil prédéterminé.

8. Procédé de gestion selon l'une quelconque des revendications 1 à 7, **caractérisé en ce qu'**au cours de ladite étape d'analyse, ledit serveur d'état d'éveil analyse le contenu d'un message d'état transmis par une application d'éveil mise en oeuvre par ledit terminal audit serveur d'état d'éveil, de façon à en déduire ladite information d'éveil dudit terminal.

9. Procédé de gestion selon la revendication 8, **caractérisé en ce que** ledit message d'état est un message binaire comprenant une pluralité de bits, chacun desdits bits étant associé à au moins un mode de transmission,
et **en ce qu'**au cours de ladite étape d'analyse, ledit serveur d'état d'éveil détermine la valeur de chacun desdits bits et en déduit l'état d'éveil dudit terminal vis-à-vis dudit au moins un mode de transmission associé,
un bit de valeur 0, respectivement 1, indiquant que ledit terminal est dans un état inactif, respectivement actif, pour le ou lesdits mode(s) de transmission associé(s), ou inversement.

10. Procédé de gestion selon l'une quelconque des revendications 8 et 9, **caractérisé en ce que** les échanges entre ladite application d'éveil mise en oeuvre par ledit terminal et ledit serveur d'état d'éveil sont réalisés selon un protocole d'activité déterminé, définissant une structure dudit message d'état.

11. Procédé de gestion selon l'une quelconque des revendications 8 à 10, **caractérisé en ce que** ledit message d'état comprend en outre une information d'identification d'un utilisateur dudit terminal.

12. Procédé de gestion selon la revendication 11, **caractérisé en ce que** ledit serveur d'état d'éveil détermine ledit protocole d'activité mis en oeuvre, en fonction de ladite information d'identification.

13. Procédé de gestion selon l'une quelconque des revendications 8 à 12, **caractérisé en ce que** ledit message d'état comprend en outre au moins l'une des informations suivantes :
- une information d'authentification ;
- une adresse IP (en anglais "Internet Protocol") publique dudit utilisateur.

14. Procédé de gestion selon l'une quelconque des revendications 2 à 13, **caractérisé en ce qu'**il comprend en outre une étape de mise à disposition de ladite information d'état d'éveil, par ladite base de données d'état d'éveil, à l'un au moins desdits fournisseurs de service.

15. Procédé de gestion selon la revendication 14, **caractérisé en ce qu'**au cours de ladite étape de mise à disposition, ladite base de données transmet ladite information d'état d'éveil en réponse à une requête dudit fournisseur de service.

16. Procédé de gestion selon l'une quelconque des revendications 14 et 15, **caractérisé en ce que** ladite base de données d'état d'éveil met en oeuvre ladite étape de mise à disposition à chaque changement de valeur de ladite information d'état d'éveil.

17. Procédé de gestion selon l'une quelconque des revendications 1 à 16, **caractérisé en ce qu'**il comprend en outre une étape de transmission par ledit serveur d'état d'éveil d'un message informatif audit utilisateur.

18. Procédé de gestion selon la revendication 17, **caractérisé en ce que** le format dudit message informatif est de type MIME (en anglais "Multipurpose Internet Mail Extension").

## Claims

1. Activity status management method for at least one terminal in a radio communications network, the said network permitting access from the said terminal to at least one service,
**characterised in that** it implements an analysis step, using an apparatus dedicated to activity status management, of the activity of the said terminal, providing information as to the activity status of the said terminal, accessible to at least one service provider internal or external to the said radio communications network,
**in that** the said activity status information provides data selectively on the activity status of the said terminal with regard to a mode of transmission associated with a class of service(s),
and **in that** the apparatus dedicated to activity status management is connected to the said radio communications network.

2. Management method according to claim 1, **characterised in that** the said apparatus dedicated to activity status management comprises:
- at least one activity status server implementing the said analysis step;
- at least one activity status database implementing a storage step in which the said activity status information is stored.

3. Management method according to claim 2, **characterised in that** the said database is accessible via the said radio communications network and/or via at least one other communications network.

4. Management method according to claims 2 and 3, **characterised in that** during the said analysis step, the said activity status server analyses the status of a connection established between an activity status client implemented by the said terminal and the said activity status server,
and **in that** the said activity status information takes on a first value of "active" when the said connection is open, and a second value of "inactive" when the said connection is broken.

5. Management method according to claim 4, **characterised in that** the said connection is implemented using a protocol of the TCP ("Transmission Control Protocol") type.

6. Management method according to claims 4 and 5, **characterised in that** the said connection expires after a maximum predetermined time and is reallocated later on to the said power status client of the said terminal.

7. Management method according to claims 2 to 6, **characterised in that** during the said analysis step, the said activity status server analyses the length of time since reception of the last packet transmitted by an activity status client implemented by the said terminal to the said activity status server,
and **in that** the said activity status information takes on a value of "active" when the said length of time is inferior to a predetermined threshold, and a second value of "inactive" when the said length of time is superior to the said threshold.

8. Management method as claimed in any of the claims 1 to 7, **characterised in that** during the said analysis step, the said activity status server analyses the contents of a status message transmitted by an activity status client implemented by the said terminal to the said activity status server, in such a way as to deduce the said activity status information of the said terminal.

9. Management method as claimed in claim 8, **characterised in that** the said status message is a binary message comprising a plurality of bits, each of said bits being associated with at least one transmission mode,
and **in that** during the said analysis step the said activity status server determines the value of each bit and deduces the activity status of the said terminal with regard to the said at least one mode of transmission associated,
a bit of value 0, respectively 1, indicating that the said terminal is in an active, respectively inactive, state, for the said transmission modes associated, or vice versa.

10. Management method as claimed in any of the claims 8 and 9, **characterised in that** the exchanges between the said activity status client implemented by the said terminal and the said activity status server are carried out according to a definite activity protocol, defining a structure of the said status message.

11. Management method as claimed in any of the claims 8 to 10, **characterised in that** the said status message comprises in addition identification data for a user of the said terminal.

12. Management method according to claim 11, **characterised in that** the said activity status server determines the said activity protocol implemented, depending on the said identification data.

13. Management method as claimed in any of the claims 8 to 12, **characterised in that** the said status message comprises in addition at least one of the following pieces of information:
- authentication information;
- a public IP ("Internet Protocol") address of the said user.

14. Management method as claimed in any of the claims 2 to 13, **characterised in that** it comprises in addition an availability step in which the said activity status information is made available to at least one of the said service providers by the said activity status database.

15. Management method according to claim 14, **characterised in that** during the said availability step, the said database transmits the said activity status information in reply to a query from the said service provider.

16. Management method as claimed in any of the claims 14 and 15, **characterised in that** the said activity status database implements the said availability step each time the value of the said activity status information changes.

17. Management method as claimed in any of the claims 1 to 16, **characterised in that** it comprises in addition a transmission step in which the said activity status server transmits an informative message to the said user.

18. Management method according to claim 17, **characterised in that** the format of such an informative message is that of the MIME type ("Multipurpose Internet Mail Extension").

## Patentansprüche

1. Verfahren zur Verwaltung des Wachzustands von mindestens einem Endgerät eines Funknetzes, wobei das Netz den Zugriff des Endgeräts auf mindestens einen Dienst ermöglicht,
**dadurch gekennzeichnet, dass** es einen Schritt zur Analyse des Betriebs des Endgeräts durch eine auf die Verwaltung des Wachzustands zugeschnittene Ausrüstung ausführt, der eine Wachzustandsinformation des Endgeräts liefert, auf die mindestens ein in Bezug auf das Funknetz interner oder externer Dienstleister zugreifen kann,
**dadurch**, dass die Wachzustandsinformation selektiv Auskunft über den Wachzustand des Endgeräts in Bezug auf ein Übertragungsverfahren gibt, das einer Klasse eines Dienstes oder von Diensten zugehörig ist,
und **dadurch**, dass die auf die Verwaltung des Wachzustands zugeschnittene Ausrüstung mit dem Funknetz verbunden ist.

2. Verwaltungsverfahren nach Anspruch 1, **dadurch gekennzeichnet, dass** die auf die Verwaltung des Wachzustands zugeschnittene Ausrüstung Folgendes umfasst:
- mindestens einen Wachzustandsserver, der den Analyseschritt ausführt;
- mindestens eine Wachzustandsdatenbank, die einen Schritt zum Speichern der Wachzustandsinformation ausführt.

3. Verwaltungsverfahren nach Anspruch 2, **dadurch gekennzeichnet, dass** über das Funknetz und/oder über mindestens ein anderes Nachrichtennetz auf die Datenbank zugegriffen werden kann.

4. Verwaltungsverfahren nach einem der Ansprüche 2 und 3, **dadurch gekennzeichnet, dass** der Wachzustandsserver während des Analyseschritts den Zustand einer zwischen einer durch das Endgerät ausgeführten Wachanwendung und dem Wachzustandsserver hergestellten Verbindung analysiert,
und **dadurch**, dass die Wachzustandsinformation einen ersten, "aktiven" Wert, wenn die Verbindung offen ist, und einen zweiten, "inaktiven" Wert annimmt, wenn die Verbindung unterbrochen ist.

5. Verwaltungsverfahren nach Anspruch 4, **dadurch gekennzeichnet, dass** die Verbindung gemäß einem Protokoll des Typs TCP (in Englisch "Transmission Control Protocol" für "Übertragungskontrollprotokoll") ausgeführt wird.

6. Verwaltungsverfahren nach einem der Ansprüche 4 bis 5, **dadurch gekennzeichnet, dass** die Verbindung nach einer vorbestimmten Höchstzeit unterbrochen und der Wachanwendung des Endgeräts zu einem späteren Zeitpunkt neu zugewiesen wird.

7. Verwaltungsverfahren nach einem der Ansprüche 2 bis 6, **dadurch gekennzeichnet, dass** der Wachzustandsserver während des Analyseschritts die Dauer analysiert, die seit dem letzten Empfang eines durch eine durch das Endgerät ausgeführte Wachanwendung an den Wachzustandsserver übertragenen Pakets verstrichen ist,
und **dadurch**, dass die Wachzustandsinformation einen ersten, "aktiven" Wert, wenn die Dauer niedriger als ein vorbestimmter Schwellenwert ist, und einen zweiten, "inaktiven" Wert annimmt, wenn die Dauer höher ist als der vorbestimmte Schwellenwert.

8. Verwaltungsverfahren nach einem der Ansprüche 1 bis 7, **dadurch gekennzeichnet, dass** der Wachzustandsserver während des Analyseschritts den Inhalt einer durch eine durch das Endgerät ausgeführte Wachanwendung an den Wachzustandsserver übertragenen Zustandsmeldung analysiert, um davon die Wachinformation des Endgeräts abzuleiten.

9. Verwaltungsverfahren nach Anspruch 8, **dadurch gekennzeichnet, dass** die Zustandsmeldung eine binäre Meldung ist, die mehrere Bits umfasst, wobei jedes der Bits mindestens einem Übertragungsverfahren zugehörig ist,
und **dadurch**, dass der Wachzustandsserver während des Analyseschritts den Wert von jedem der Bits bestimmt und davon den Wachzustand des Endgeräts in Bezug auf mindestens ein zugehöriges Übertragungsverfahren ableitet,
wobei ein Bit mit Wert 0 beziehungsweise 1 angibt, dass das Endgerät sich für das oder die zugehörige/n Übertragungsverfahren in einem inaktiven beziehungsweise aktiven Zustand befindet, oder umgekehrt.

10. Verwaltungsverfahren nach einem der Ansprüche 8 und 9, **dadurch gekennzeichnet, dass** der Austausch zwischen der durch das Endgerät ausgeführten Wachanwendung und dem Wachzustandsserver gemäß einem bestimmten Betriebsprotokoll ausgeführt wird, das eine Struktur der Zustandsmeldung definiert.

11. Verwaltungsverfahren nach einem der Ansprüche 8 bis 10, **dadurch gekennzeichnet, dass** die Zustandsmeldung ferner eine Kennungsinformation eines Benutzers des Endgeräts umfasst.

12. Verwaltungsverfahren nach Anspruch 11, **dadurch gekennzeichnet, dass** der Wachzustandsserver das ausgeführte Betriebsprotokoll in Abhängigkeit von der Kennungsinformation bestimmt.

13. Verwaltungsverfahren nach einem der Ansprüche 8 bis 12, **dadurch gekennzeichnet, dass** die Zustandsmeldung ferner mindestens eine der folgenden Informationen umfasst:
- eine Authentifizierungsinformation;
- eine öffentliche IP-Adresse (IP = Internet-Protokoll) des Benutzers.

14. Verwaltungsverfahren nach einem der Ansprüche 2 bis 13, **dadurch gekennzeichnet, dass** es ferner einen Schritt der Zurverfügungstellung der Wachzustandsinformation für den mindestens einen der Dienstleister durch die Wachzustandsdatenbank umfasst.

15. Verfahren nach Anspruch 14, **dadurch gekennzeichnet, dass** die Datenbank während des Schritts der Zurverfügungstellung die Wachzustandsinformation als Antwort auf eine Anfrage des Dienstleisters überträgt.

16. Verwaltungsverfahren nach einem der Ansprüche 14 und 15, **dadurch gekennzeichnet, dass** die Wachzustandsdatenbank den Schritt der Zurverfügungstellung bei jeder Änderung des Werts der Wachzustandsinformation ausführt.

17. Verwaltungsverfahren nach einem der Ansprüche 1 bis 16, **dadurch gekennzeichnet, dass** es ferner einen Schritt der Übertragung einer Informationsmeldung durch den Wachzustandsserver an den Benutzer umfasst.

18. Verwaltungsverfahren nach Anspruch 17, **dadurch gekennzeichnet, dass** das Format der Informationsmeldung vom Typ MIME ("Multipurpose Internet Mail Extension") ist.
